# EUROPÄISCHE PATENTSCHRIFT

(11) **EP 2 795 529 B1**
(45) Veröffentlichungstag und Bekanntmachung des Hinweises auf die Patenterteilung: **24.11.2021**
(21) Anmeldenummer: 11808650.3
(22) Anmeldetag: 23.12.2011
(51) Int. Cl.: G06K 5/02

(54) **VERFAHREN UND SYSTEM ZUR ÜBERPRÜFUNG DES VORHANDENSEINS BZW. DER LESBARKEIT EINER WARENINFORMATION**
METHOD AND SYSTEM FOR CHECKING THE PRESENCE OR THE LEGIBILITY OF PRODUCT INFORMATION
PROCÉDÉ ET SYSTÈME DE VÉRIFICATION DE LA PRÉSENCE OU DE LA LISIBILITÉ D'UNE INFORMATION DE MARCHANDISE

(43) Veröffentlichungstag der Anmeldung: 29.10.2014
(73) Patentinhaber: Knauf Gips KG, 97346 Iphofen (DE)
(72) Erfinder: TKATSCHENKO, Olessja, Willanzheim 97348 (DE); ABLE, Peter, 97258 Gollhofen (DE)
(74) Vertreter: Zech, Stefan Markus
(86) Internationale Anmeldenummer: PCT/EP2011/074013
(87) Internationale Veröffentlichungsnummer: WO 2013/091734

(56) Entgegenhaltungen:
- EP-A2- 0 932 111
- WO-A1-93/03454
- WO-A1-95/22098
- WO-A1-99/48037
- US-A- 4 204 639
- US-A- 5 412 194
- US-A1- 2005 082 376
- US-A1- 2009 072 035
- US-A1- 2011 007 343
- US-B1- 6 419 782

## Beschreibung

Die Erfindung betrifft ein Verfahren zur Überprüfung des Vorhandenseins und/oder der Lesbarkeit einer Wareninformation einer Ware, insbesondere einer Verpackungsinhaltsinformation einer Verpackung, nach Anspruch 1 sowie ein entsprechendes System nach Anspruch 8 und eine Verwendung des Systems nach Anspruch 13.

In Verpackungsanlagen, beispielsweise Absackanlagen, wird von den Anlagenbedienern üblicherweise überprüft bzw. überwacht, ob Verpackungsinhaltshinweise, insbesondere ein Produktionsdatumsaufdruck, vorhanden und lesbar sind. Dadurch soll sichergestellt werden, dass keine unbeschrifteten Waren, beispielsweise Produktionssäcke, zum Kunden gelangen, um Reklamationen zu vermeiden. Insgesamt ist dieses Überwachungsverfahren vergleichsweise aufwendig. Auch bei einer hohen Zuverlässigkeit der Mitarbeiter ist die Wahrscheinlichkeit noch recht groß, dass unbeschriftete Waren, beispielsweise Produktionssäcke, zum Kunden gelangen. Die Wahrscheinlichkeit für Reklamationen ist daher immer noch vergleichsweise hoch.

WO 93/03451 A1 beschreibt einen Drucker, bei dem ein optischer Markierungssensor an der Druckvorrichtung vorgesehen ist, um die zeichenbildenden Elemente durch Abtasten zuvor gedruckter Zeilen auf fehlerhafte Funktion zu prüfen.

EP 0 932 034 54 A2 offenbart ein Verfahren und eine Vorrichtung zum Drucken zweidimensionaler maschinenlesbarer Symbole.

US 2009/072035 A1 offenbart eine Druckvorrichtung, die mit einem Aufzeichnungskopf ein Bild aufzeichnet, und auf ein System zur Erzeugung von Strichcodes, das Daten erzeugt, die zum Drucken von Strichcodes auf der Druckvorrichtung verwendet werden.

WO 99/48037 A1 beschreibt Verfahren zum Betreiben eines Druckkopfes zum Drucken eines linearen Musters auf ein Substrat.

US 6 419 782 B1 offenbart Strichcode-Etikettiersysteme und insbesondere auf ein Strichcode-Etikettiersystem, das ein Strichcode-Etikett auf Artikel druckt und anbringt, die auf einem Förderband befördert werden.

Der vorliegenden Erfindung liegt die Aufgabe zugrunde, auf einfache Weise die Zuverlässigkeit der Überwachung einer aufgedruckten Wareninformation, insbesondere Verpackungsinhaltsinformation, zu verbessern.

Diese Aufgabe wird durch ein Verfahren nach Anspruch 1 gelöst.

Insbesondere wird die Aufgabe durch ein Verfahren zur Überprüfung des Vorhandenseins und/oder der Lesbarkeit einer Wareninformation einer Ware, insbesondere einer Verpackungsinhaltsinformation einer Verpackung, gelöst, wobei das Verfahren die Schritte umfasst:
a) Aufbringen (Aufdrucken) der Wareninformation, insbesondere Verpackungsinhaltsinformation auf die Ware, insbesondere Verpackung, unter Verwendung einer Druckvorrichtung;
b) Aufbringen (Aufdrucken) eines (maschinenlesbaren) zusätzlich zu der Wareninformation, insbesondere Verpackungsinhaltsinformation, ausgebildeten, separaten Identifikationsmittels unter Verwendung der (selben) Druckvorrichtung;
c) Erfassen der Ware, insbesondere Verpackung, mit einem Lesegerät, um festzustellen, ob das Identifikationsmittel vorhanden und auslesbar ist, wobei das Identifikationsmittel einen Barcode umfasst, wobei einzelne Striche des Barcodes parallel zu einer Aufdruckrichtung ausgerichtet sind und das Lesegerät ein optisches Lesegerät umfasst, wobei die Aufdruckrichtung durch eine Bewegung der Ware bzw. der Verpackungsinhaltsinformation auf einem Fließband vorgegeben wird.
Ein Kerngedanke der Erfindung liegt darin, dass indirekt über das Aufdrucken und Auslesen des Identifikationsmittels eine (mittelbare) Überprüfung des Vorhandenseins und/oder der Lesbarkeit einer Wareninformation möglich ist, dadurch dass dieselbe Druckvorrichtung sowohl für die Wareninformation, insbesondere Verpackungsinhaltsinformation, als auch das Identifikationsmittel verwendet wird. Das (maschinenlesbare) Identifikationsmittel kann dann gemäß einer konkreten Weiterbildung auf einfache Weise durch ein entsprechendes Lesegerät ausgelesen werden. Dadurch, dass dieselbe Druckvorrichtung verwendet wird, kann mit hoher Wahrscheinlichkeit davon ausgegangen werden, dass, wenn das Identifikationsmittel (erfolgreich) aufgedruckt worden ist, auch die Wareninformation, insbesondere Verpackungsinhaltsinformation erfolgreich (insbesondere maschinenlesbar) aufgedruckt worden ist. Eine unmittelbare - vom Anlagenbediener durchzuführende - Überprüfung des Vorhandenseins bzw. der Lesbarkeit der Wareninformation, insbesondere Verpackungsinhaltsinformation, kann dadurch entfallen. Selbstverständlich ist denkbar, dass zu einer weiteren Verbesserung der Zuverlässigkeit auch noch eine weitere, beispielsweise durch einen Anlagenbediener durchzuführende, Überprüfung stattfindet. Dies ist jedoch nicht unbedingt notwendig.

Die Erfindung macht auf einfache Weise davon Gebrauch, dass ein Fehler beim Aufdrucken der Wareninformation, insbesondere Verpackungsinhaltsinformation, beispielsweise aufgrund einer verstopften Düse eines Tintenstrahldruckers (oder Datumsschreibers), mit hoher Wahrscheinlichkeit auch mit einem fehlerhaften oder nicht erfolgten Aufbringen des Identifikationsmittels verbunden ist. Durch die Bereitstellung des Lesegeräts kann daher auf einfache Weise auf das Vorhandensein bzw. die Lesbarkeit der Wareninformation (der Verpackungsinhaltsinformation) rückgeschlossen werden. Das Verfahren ist daher gegenüber dem oben beschriebenen Verfahren, bei dem eine Überprüfung durch die Anlagenbediener stattfindet, erheblich vereinfacht, wobei zugleich die Zuverlässigkeit der Überprüfung verbessert ist.

Das Identifikationsmittel umfasst einen Barcode und/oder Smartcode (bzw. ist aus einem solchen gebildet). Ein derartiges Identifikationsmittel kann auf einfache Weise gedruckt und ausgelesen werden. Das Lesegerät kann ein optisches Lesegerät, insbesondere ein Barcode- und/oder Smartcode-Lesegerät, insbesondere einen Barcode- und/oder Smartcode-Scanner umfassen (bzw. aus einem solchen gebildet sein).

Einzelne Striche des Barcodes sind parallel zu einer Aufdruckrichtung ausgerichtet. Bei einer derartigen Ausführung kann bereits bei einem teilweisen Versagen einer Aufbringvorrichtung (beispielsweise bei nur einer oder wenigen verstopften Düsen eines Tintenstrahldruckers) ein mangelhaftes Aufbringen bzw. ein mangelhafter Aufdruck auf einfache Weise erkannt werden. Die Überprüfung wird damit noch zuverlässiger. Ein "leiterförmiger" Barcode wird gegenüber einem "zaunförmigen" Barcode bevorzugt. Bei einem "zaunförmigen" Barcode, also einem Barcode, bei dem die einzelnen Striche senkrecht zu der Aufdruckrichtung angeordnet sind, würde schon ein Ausschnitt des Barcodes ausreichen, um den Barcode durch das Lesegerät auslesen zu können; wird demgegenüber ein "leiterförmiger" Barcode (also ein Barcode, bei dem die einzelnen Striche parallel zu der Aufdruckrichtung angeordnet sind) vorgesehen, kann mit höherer Wahrscheinlichkeit davon ausgegangen werden, dass die Wareninformation ebenso lesbar ist. Sobald am Barcode ein Strich nicht vorhanden ist, kann dies angezeigt bzw. erkannt werden. Besonders vorteilhaft ist es, wenn der "leiterförmige" Barcode hinsichtlich seiner Breite mit der Wareninformation (beispielsweise einem Produktionsdatum) bündig abschließt. Der Barcode kann eine Breite von (etwa) 0,8 cm bis 1,2 cm, insbesondere 1,0 cm aufweisen. Die Breite entspricht der Ausdehnung senkrecht auf die Ausrichtung der einzelnen Striche des Barcodes bzw. senkrecht auf die Aufdruckrichtung.

Unter der Aufbringrichtung bzw. im konkreten Fall der Aufdruckrichtung soll diejenige Richtung verstanden werden, die durch das Aufbringverfahren (bzw. Aufdruckverfahren) vorgegeben wird und soll von einem Startpunkt der Aufbringung (Aufdruckung) zu einem Endpunkt der Aufbringung (Aufdruckung) gerichtet sein. Beispielsweise kann die Aufbringrichtung durch eine Aufbringvorrichtung (wie beispielsweise einen Tintenstrahldrucker) vorgegeben werden und/oder durch eine Bewegung (Transportbewegung) der Ware (beispielsweise auf einem Fließband).

In einer bevorzugten Ausführungsform wird der Schritt a) vor dem Schritt b) durchgeführt. Das Aufbringen des Identifikationsmittels erfolgt also zeitlich nach dem Aufbringen der Wareninformation, insbesondere Verpackungsinhaltsinformation. Dadurch wird auf einfache Weise die Aussagekraft eines Fehlers im Zusammenhang mit der Bedruckung des Identifikationsmittels erhöht, was das Verfahren zuverlässiger macht.

Aufgrund der immer geringer werdenden Kosten bei digitalen Originalbildaufnahmevorrichtungen besteht ein Trend im Stand der Technik dahingehend, das Vorhandensein bzw. die Lesbarkeit von Wareninformationen - soweit dies nicht manuell erfolgt - durch eine Originalbildaufnahme und entsprechende Auswertung durch eine Software zu bewerkstelligen. Entgegen diesem Trend wird nun erfindungsgemäß vorgeschlagen, auf derartige digitale Originalbildaufnahmen zu verzichten und eine Überprüfung durch eine Auslesung eines Smart- oder Barcodes zu bewerkstelligen. Dies hat sich im Nachhinein insbesondere unter extremen Bedingungen, wie diese beispielsweise in Absackanlagen für Gips oder dergleichen vorliegen, als vorteilhaft erwiesen. Unter derartigen Bedingungen können beispielsweise digitale Kameras leicht verschmutzt werden, was diese unbrauchbar (oder zumindest weniger zuverlässig) machen kann. Es hat sich jedoch gezeigt, dass das Auslesen eines Bar- oder Smartcodes unter solchen Bedingungen immer noch (zuverlässig) möglich ist. Insgesamt wird durch die vorliegende Erfindung eine konstruktiv einfache und günstige Lösung vorgeschlagen, die trotz ihrer konstruktiven Vereinfachung gegenüber dem Trend im Stand der Technik zuverlässiger ist.

Ein zeitlicher Abstand zwischen dem Aufbringen der Wareninformation, insbesondere Verpackungsinhaltsinformation, und dem Aufbringen des Identifikationsmittels, kann kleiner als 60 Sekunden, vorzugsweise kleiner als 20 Sekunden, weiter vorzugsweise kleiner als 3 Sekunden, noch weiter vorzugsweise kleiner als 1 Sekunde sein. Durch einen vergleichsweise geringen Abstand wird die Wahrscheinlichkeit, dass ein Fehler im Zusammenhang mit der Bedruckung des Identifikationsmittels mit einem Fehler betreffend der Bedruckung der Wareninformation, insbesondere Verpackungsinhaltsinformation, verbunden ist, gesteigert. Damit wird die Zuverlässigkeit des Verfahrens erhöht. In denkbaren Ausführungsformen ist der zeitliche Abstand größer oder gleich 0,5 Sekunden, vorzugsweise größer oder gleich 1 Sekunde. Dadurch wird die Aufdruckung vereinfacht.

Vorzugsweise wird das Identifikationsmittel bezüglich einer Aufbringrichtung (Aufdruckrichtung) hinter der Wareninformation, insbesondere Verpackungsinhaltsinformation, aufgebracht. Durch eine derartige Anordnung bzw. Aufbringung oder Aufdruckung wird auf besonders einfache und zuverlässige Weise ausgenutzt, dass ein Fehler im Zusammenhang mit der Aufbringung der Wareninformation durch einen einfach feststellbaren Fehler im Zusammenhang mit der Aufbringung des Identifikationsmittels erkannt werden kann.

Ein räumlicher Abstand zwischen der (aufgedruckten) Wareninformation, insbesondere Verpackungsinhaltsinformation, und dem (aufgedruckten) Identifikationsmittel kann kleiner oder gleich 10 cm, vorzugsweise kleiner oder gleich 5 cm, noch weiter vorzugsweise kleiner oder gleich 3 cm sein. Durch einen derartigen, vergleichsweise geringen Abstand, ist die Wahrscheinlichkeit vergleichsweise hoch, dass die Druckbedingungen, die durch den Ort der Bedruckung vorgegeben werden, vergleichsweise homogen sind. Ist die Verpackung beispielsweise verschmutzt, so ist die Wahrscheinlichkeit vergleichsweise hoch, dass sich die Verschmutzung sowohl auf die Lesbarkeit des Identifikationsmittels als auch die Lesbarkeit der Wareninformation bzw. Verpackungsinhaltsinformation auswirkt. In weiteren vorgesehenen Alternativen kann der räumliche Abstand größer oder gleich 0,5 cm, vorzugsweise größer oder gleich 1 cm, noch weiter vorzugsweise größer oder gleich 3 cm sein. Dadurch wird die Auslesung des Identifikationsmittels vereinfacht (beispielsweise kann die Wareninformation bzw. Verpackungsinhaltsinformation mit nur geringerer Wahrscheinlichkeit einen Einfluss auf die Auslesung des Identifikationsmittels haben).

Im Allgemeinen bezieht sich das Verfahren auf die Überwachung des Aufdrucks eines Verpackungsinhalts. Als Verpackungen kommen beispielsweise Säcke, Tüten, Kisten oder dergleichen in Frage. Der Aufdruck kann beispielsweise ein Produktionsdatum oder ein Haltbarkeitsdatum umfassen (bzw. aus solchen bestehen). Insbesondere bei Waren, die auch unverpackt in den Handel kommen (beispielsweise Ziegelsteine, Gipsplatten oder dergleichen) ist es jedoch auch denkbar, dass eine Wareninformation, insbesondere ein Wareninformationsaufdruck unmittelbar auf dem Produkt (bzw. der Ware) aufgebracht wird. Auch kann es sich bei Wareninformationen um solche Informationen handeln, die beispielsweise nur an der Ware angebracht bzw. mit dieser verbunden sind, beispielsweise auf einem Aufkleber oder einem angebrachten Schild oder dergleichen.

Bei einer bevorzugten Ausführungsform erfolgt ein Warnsignal und/oder eine Anzeige und/oder eine Unterbrechung eines Warenbearbeitungsverfahrens, insbesondere Warenversendungs- und/oder Warenverpackungs- und/oder Warenbeschriftungsverfahrens, wenn in Schritt c) festgestellt wird, dass das Identifikationsmittel nicht vorhanden bzw. nicht auslesbar ist. Dadurch kann die Zuverlässigkeit des Überwachungsverfahrens weiter verbessert werden. Beispielsweise kann ein Förderband (sofort) stehen bleiben und/oder ein Signal (beispielsweise ein Blinklicht) erfolgen, das dem Anlagenbediener mitteilt, dass bei einer Beschriftung der Ware bzw. der Verpackung womöglich ein Fehler vorliegt.

In einer konkreten Weiterbildung kann auf eine Vielzahl von Waren bzw. Verpackungen dasselbe Identifikationsmittel sowie ggf. unterschiedliche Wareninformationen oder Verpackungsinhaltsinformationen aufgebracht werden. Durch die Verwendung eines immer gleichen Identifikationsmittels wird das Verfahren, insbesondere hinsichtlich der Auslesung des Identifikationsmittels, weiter vereinfacht. Dabei wird gleichzeitig die Zuverlässigkeit der Überwachung gesteigert. Durch eine derartige Weiterbildung kann weiter ein ganz zentraler Vorteil der vorliegenden Erfindung, nämlich die Ausnutzung von Korrelationen zwischen dem Vorhandensein des Identifikationsmittels und der Wareninformation, ausgenutzt werden.

In einer konkreten Ausführungsform umfasst die Wareninformation, insbesondere Verpackungsinhaltsinformation, Buchstaben und/oder Zahlen und/oder Sonderzeichen (bzw. besteht aus solchen), insbesondere ein (Produktions-)datum (bzw. besteht aus einem solchen). Durch Buchstaben oder Zahlen kann auf einfache Weise eine Angabe von Wareninformationen oder Verpackungsinhaltsinformationen erfolgen (und zwar unabhängig von der technischen Ausrüstung des Abnehmers). Werden derartige Daten, wie beispielsweise Produktionsdaten, mit einem maschinenlesbaren Identifikationsmittel (beispielsweise einem Barcode) verknüpft, wird auf besonders einfache Weise eine Überwachung ermöglicht, inwiefern die Daten vorhanden bzw. lesbar sind.

Die oben genannte Aufgabe wird unabhängig gelöst durch ein System, insbesondere zur Durchführung des oben genannten Verfahrens, zur Überprüfung (Überwachung) des Vorhandenseins und/oder der Lesbarkeit einer Wareninformation, insbesondere eines Verpackungsinhaltshinweises, umfassend eine Druckvorrichtung, die ausgebildet ist, um die Wareninformation, insbesondere Verpackungsinhaltsinformation, sowie ein zusätzlich zu der Wareninformation, insbesondere Verpackungsinhaltsinformation, ausgebildetes, separates Identifikationsmittel auf die Ware, insbesondere Verpackung, aufzudrucken, und ein Lesegerät, das ausgebildet ist, um festzustellen, ob das Identifikationsmittel vorhanden und auslesbar ist. Das Identifikationsmittel umfasst einen Smartcode und/oder einen Barcode, wobei einzelne Striche des Barcodes parallel zu einer Aufdruckrichtung ausgerichtet sind. Eine vorbestimmte Ware bzw. Verpackung kann ebenfalls Bestandteil des Systems sein. Bezüglich der Vorteile des Systems wird auf das obige Verfahren verwiesen.

Vorzugsweise umfasst die Druckvorrichtung des Systems einen Tintenstrahldrucker (mit einer Tintenstrahldüse), insbesondere ein Datumsschreiber. Bei einem Tintenstrahldrucker kann dann auf einfache Weise festgestellt werden, ob dieser fehlerfrei funktioniert, insbesondere ob die Tintenstrahldüse ggf. verstopft ist. Ist die Tintenstrahldüse verstopft, wird weder die Wareninformation noch das Identifikationsmittel aufgedruckt. Daher kann ein Fehlen oder eine mangelnde Ausführung der Wareninformation auf einfache Weise erkannt werden.

Das Lesegerät kann ein optisches Lesegerät sein, insbesondere ein Barcode- und/ oder Smartcode-Lesegerät, vorzugsweise ein Barcode- und/oder ein Smartcode-Scanner. Dadurch wird die Überwachung des Aufdruckes weiter vereinfacht. Die Wareninformation kann aus Zahlen und/oder Buchstaben und/oder Sonderzeichen, insbesondere aus einem (Produktions-)datum, gebildet sein. Das System kann eine Warnsignaleinrichtung, insbesondere Warnleuchte, umfassen.

In einer bevorzugten Ausführungsform ist zwischen Druckvorrichtung und Lesegerät eine Beförderungseinrichtung, beispielsweise ein Fließband, vorgesehen, um die Waren von der Druckvorrichtung zum Lesegerät zu befördern. Dadurch wird die Überwachung der Wareninformation, insbesondere Verpackungsinhaltsinformation, weiter vereinfacht.

Die oben genannte Aufgabe wird unabhängig gelöst durch eine Druckvorrichtung zur Ermöglichung der Überprüfung des Vorhandenseins und/oder der Lesbarkeit einer Wareninformation, insbesondere Verpackungsinformation, insbesondere zur Durchführung bzw. Ermöglichung der Durchführung des Verfahrens der oben beschriebenen Art, vorzugsweise als Bestandteil des Systems der oben beschriebenen Art, wobei die Druckvorrichtung ausgebildet ist, um eine Wareninformation, insbesondere Verpackungsinhaltsinformation, sowie ein zusätzlich zu der Wareninformation, insbesondere Verpackungsinhaltsinformation, ausgebildetes, separates Identifikationsmittel auf einer Ware, insbesondere Verpackung aufzudrucken. Das Identifikationsmittel umfasst einen Smartcode und/oder einen Barcode, wobei einzelne Striche des Barcodes parallel zu einer Aufdruckrichtung ausgerichtet sind. Bezüglich der Vorteile wird auf das oben beschriebene Verfahren bzw. das oben beschriebene System verwiesen.

In einer bevorzugten Ausführungsform ist die Druckvorrichtung derart vorprogrammiert, dass, wenn extern ein Befehl zum Drucken einer Wareninformation, insbesondere Verpackungsinhaltsinformation, zugeführt wird, automatisch ein (separates) Identifikationsmittel auf die Ware bzw. Verpackung gedruckt wird. Dadurch wird eine Überwachung der Wareninformation weiter vereinfacht. In konkreten Ausführungsformen können beispielsweise entsprechende Druckprogramme in der Druckvorrichtung hinterlegt sein, sodass - ohne externe Anweisung - das Identifikationsmittel aufgedruckt wird. In konstruktiver Hinsicht können dazu Speichermittel und Steuereinheiten (Prozessoren oder dergleichen) vorgesehen sein.

Die oben genannte Aufgabe wird weiter unabhängig gelöst durch die Verwendung eines Systems zur Ermöglichung der Überprüfung des Vorhandenseins/ der Lesbarkeit einer Wareninformation, insbesondere Verpackungsinhaltsinformation, insbesondere für das Verfahren der oben beschriebenen Art und/oder das System der oben beschriebenen Art, mittels eines Lesegeräts, wobei dieselbe Druckvorrichtung, insbesondere dieselbe Druckmaterialausstoßeinheit zum Bedrucken der Ware, insbesondere Verpackung, sowohl mit der Wareninformation, insbesondere Verpackungsinhaltsinformation, als auch mit einem zusätzlich zu der Wareninformation, insbesondere Verpackungsinhaltsinformation, ausgebildeten, separaten Identifikationsmittel, verwendet wird. Das Identifikationsmittel umfasst einen Smartcode und/oder einen Barcode, wobei einzelne Striche des Barcodes parallel zu einer Aufdruckrichtung ausgerichtet sind. Bezüglich der Vorteile wird auf das oben beschriebene Verfahren verwiesen.

Durch die vorliegende Erfindung wird insbesondere die Überwachung beispielsweise eines Produktionsdatumaufdruckes auf Vorhandensein und Lesbarkeit erheblich vereinfacht. Im Gegensatz zum Stand der Technik wird nun eine einfache (technische) Überwachung des Vorhandenseins und der Lesbarkeit beispielsweise eines Produktionsdatums ermöglicht.

Beispielsweise kann ein leiterförmiger Barcode "in einem Zug" (ohne wesentliche Zeitverzögerung) mit einem Produktionsdatum (oder einer anderen Wareninformation) von einem Schreibsystem aufgedruckt und anschließend mit einem Lesegerät, beispielsweise einem Barcode-Lesegerät, abgefragt werden. Ist das Identifikationsmittel (der Barcode) für das Lesegerät (das Barcode-Lesegerät) lesbar, sind beispielsweise alle Düsen eines Datumsschreibers frei und es kann mit hoher Wahrscheinlichkeit von der Lesbarkeit der Information (beispielsweise des Produktionsdatums) ausgegangen werden. Sollte dies nicht der Fall sein, kann vorgesehen sein, dass ein Beförderungsmittel (beispielsweise ein Förderband) sofort stehen bleibt und ggf. ein Signal (beispielsweise ein Blinklicht) abgibt, an dem ein Anlagenbediener erkennen kann, dass ein Fehler vorliegt. Insbesondere wird gewährleistet, dass keine unbeschrifteten Waren bzw. Verpackungen (beispielsweise Säcke) unbemerkt zum Kunden gelangen.

Beim Einsatz eines Barcodes ist es besonders vorteilhaft, wenn dieser in Aufdruckrichtung hinter dem Produktionsdatum angeordnet wird und "leiterförmig" ausgerichtet wird (so dass einzelne Striche des Barcodes parallel zur Aufdruckrichtung liegen). Der Barcode soll insbesondere in einem Zug und in einer Ebene mit der Wareninformation (beispielsweise dem Produktionsdatum) aufgedruckt werden.

Wird der Barcode in Aufdruckrichtung hinter der Wareninformation aufgedruckt, können beispielsweise Düsen eines Tintenstrahldruckers einfacher überprüft werden. Insbesondere könnte erkannt werden, wenn sich die Düsen während des Aufdrucks setzen und daraus eine nicht lesbare Wareninformation (z. B. Datum) resultiert. Ein weiterer Vorteil einer "leiterförmigen" Ausbildung des Barcodes liegt darin, dass auch vergleichsweise einfache Barcodeleser verwendet werden können, wenn die Aufdruckrichtung gleich einer Bewegungsrichtung des Barcodes bzw. der Ware ist (was typischerweise durch ein Fließband vorgegeben sein kann). Bei einem "zaunförmigen" (senkrechten) Barcode wäre dieser schon bei einem Ausschnitt von beispielsweise wenigen Millimetern lesbar. Dann könnte die Vollständigkeit und Lesbarkeit des Datumsaufdrucks zumindest nicht über die ganze Breite überprüft werden. Es könnten beispielsweise obere oder untere Düsen eines Tintenstrahldruckers verstopft sein, so dass nur ein Teil des "zaunförmigen" Barcodes aufgedruckt wird. Dieser könnte dann von einem Barcode-lesegerät gelesen werden, ohne dass die Lesbarkeit des Datums sichergestellt ist. Daher sollte ein leiterförmiger (horizontaler) Barcode verwendet werden, der erst bei einem vollständigen Aufdruck (über die gesamte Breite) für den Barcodeleser auslesbar ist.

Weitere Ausführungsformen ergeben sich aus den Unteransprüchen.

Nachfolgend wird die Erfindung auch hinsichtlich weiterer Merkmale und Vorteile beschrieben, die jeweils für sich oder in Kombination als erfindungswesentlich beansprucht werden. Abänderungen hiervon sind dem Fachmann geläufig.

### Hierbei zeigen:

- Fig. 1: ein System zur Überprüfung des Vorhandenseins und/oder der Lesbarkeit eines Produktionsdatums einer Ware, die in Säcke abgefüllt wird; und
- Fig. 2: einen Sack mit Produktionsdatum und Identifikationsmittel.

In der nachfolgenden Beschreibung werden für gleiche und gleich wirkende Teile dieselben Bezugsziffern verwendet.

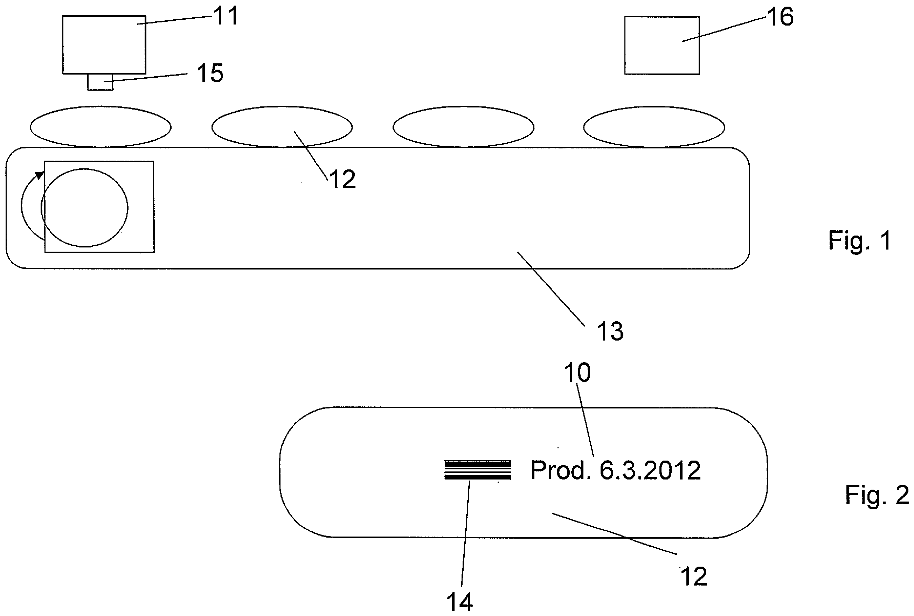

Fig. 1 zeigt ein System zur Überprüfung (bzw. Überwachung) des Vorhandenseins und/oder der Lesbarkeit einer Wareninformation (im konkreten Fall eines Produktionsdatums 10, siehe Fig. 2).

Das Produktionsdatum 10 wird von einem Tintenstrahldrucker 11 auf einen Sack 12 aufgebracht, der über eine Beförderungseinrichtung 13 (in Fig. 1 von links nach rechts) befördert wird. Der Tintenstrahldrucker 11 bedruckt den Sack 12 sowohl mit dem Produktionsdatum 10 als auch mit einem Barcode 14. Sowohl das Produktionsdatum 10 als auch der Barcode 14 wird durch dieselbe Düse 15 des Tintenstrahldruckers 11 aufgebracht. Nach dem Aufdrucken von Produktionsdatum 10 und Barcode 14 wird der Sack 12 zu einem Lesegerät 16 befördert, das als Barcode-Scanner ausgebildet ist. Durch das Lesegerät 16 kann somit festgestellt werden, ob der Barcode 14 vorhanden und auslesbar ist. Dadurch kann wiederum rückgeschlossen werden, ob das Produktionsdatum 10 vorhanden und lesbar ist.

In Fig. 1 erfolgt die Beförderungsrichtung von links nach rechts. Die Aufdruckrichtung in Fig. 2 verläuft somit von rechts nach links. In Bezug auf die Aufdruckrichtung ist der Barcode 14 somit hinter dem Produktionsdatum 10 angeordnet (bzw. in Bewegungsrichtung gemäß Fig. 1 vor dem Produktionsdatum).

Unter "Drucken" oder "Aufdrucken" soll insbesondere ein Aufbringen von Farbstoff bzw. Tinte auf die Ware bzw. eine Warenverpackung verstanden werden. Unter dem Begriff "Drucken" kann im Allgemeinen jedoch auch beispielsweise eine Einprägung verstanden werden. Anstelle eines Tintenstrahldruckers 11 kann auch eine andere Druckvorrichtung zum Einsatz kommen.

### Bezugszeichenliste:

- 10: Produktionsdatum
- 11: Tintenstrahldrucker
- 12: Sack
- 13: Beförderungseinrichtung
- 14: Barcode
- 15: Düse
- 16: Lesegerät

## Patentansprüche

1. Verfahren zur Überprüfung des Vorhandenseins und/oder der Lesbarkeit einer Wareninformation oder einer Verpackungsinhaltsinformation einer Verpackung, umfassend die Schritte:
a) Aufbringen der Wareninformation auf die Ware bzw. Verpackungsinhaltsinformation auf die Verpackung (12), unter Verwendung einer Druckvorrichtung (11);
b) Aufbringen eines zusätzlich zu der Wareninformation bzw. Verpackungsinhaltsinformation, ausgebildeten, separaten Identifikationsmittels (14) unter Verwendung derselben Druckvorrichtung (11); und
c) Erfassen der Ware bzw. Verpackung (12), mit einem Lesegerät (16), um festzustellen, ob das Identifikationsmittel (14) vorhanden und auslesbar ist, wobei das Identifikationsmittel (14) einen Barcode umfasst, wobei einzelne Striche des Barcodes parallel zu einer Aufdruckrichtung ausgerichtet sind und
das Lesegerät (16) ein optisches Lesegerät umfasst, wobei die Aufdruckrichtung durch eine Bewegung der Ware bzw. der Verpackungsinhaltsinformation auf einem Fließband vorgegeben wird.

2. Verfahren nach Anspruch 1,
**dadurch gekennzeichnet, dass**
Schritt a) vor dem Schritt b) durchgeführt wird und/oder dass ein zeitlicher Abstand zwischen dem Aufbringen der Wareninformation bzw. Verpackungsinhaltsinformation, und dem Aufbringen des Identifikationsmittels (14) kleiner als 20 Sekunden, vorzugsweise kleiner als 3 Sekunden, noch weiter vorzugsweise kleiner als 1 Sekunde ist.

3. Verfahren nach einem der vorhergehenden Ansprüche,
**dadurch gekennzeichnet, dass** das Identifikationsmittel bezüglich einer Aufbringrichtung hinter der Wareninformation bzw. Verpackungsinhaltsinformation aufgebracht wird, und/oder
dass ein räumlicher Abstand zwischen der Wareninformation bzw. Verpackungsinhaltsinformation (10) und dem Identifikationsmittel (14) kleiner oder gleich 10 cm, vorzugsweise kleiner oder gleich 5 cm und/oder größer oder gleich 1 cm, vorzugsweise größer oder gleich 3 cm ist.

4. Verfahren nach einem der vorhergehenden Ansprüche,
**dadurch gekennzeichnet, dass** ein Warnsignal und/oder eine Anzeige und/oder eine Unterbrechung eines Warenbearbeitungsverfahrens, insbesondere Warenversendungs- und/oder Warenverpackungs- und/oder Warenbeschriftungsverfahrens erfolgt, wenn in Schritt c) festgestellt wird, dass das Identifikationsmittel (14) nicht vorhanden bzw. nicht auslesbar ist.

5. Verfahren nach einem der vorhergehenden Ansprüche,
**dadurch gekennzeichnet, dass** auf eine Vielzahl von Waren bzw. Verpackungen (12) dasselbe Identifikationsmittel (14) sowie ggf. unterschiedliche Wareninformationen bzw. Verpackungsinhaltsinformationen aufgebracht werden.

6. Verfahren nach einem der vorhergehenden Ansprüche,
**dadurch gekennzeichnet, dass** die Wareninformation bzw. Verpackungsinhaltsinformation, Buchstaben und/oder Zahlen und/oder Sonderzeichen, insbesondere ein Produktionsdatum, umfasst.

7. Verfahren nach Anspruch 1,
**dadurch gekennzeichnet, dass** das optische Lesegerät ein Barcode-Lesegerät, vorzugsweise ein Barcode-Scanner ist.

8. System zur Überprüfung des Vorhandenseins und/oder der Lesbarkeit einer Wareninformation oder einer Verpackungsinhaltsinformation, umfassend
- eine Druckvorrichtung, die ausgebildet ist, um die Wareninformation bzw. Verpackungsinhaltsinformation, sowie ein zusätzlich zu der Wareninformation bzw. Verpackungsinhaltsinformation, ausgebildetes, separates Identifikationsmittel (14) auf die Ware bzw. Verpackung (12) aufzudrucken,
**gekennzeichnet durch**
- ein Lesegerät (16), das ausgebildet ist, um festzustellen, ob das Identifikationsmittel (14) vorhanden und auslesbar ist, wobei das Identifikationsmittel (14) einen Barcode umfasst, wobei einzelne Striche des Barcodes parallel zu einer Aufdruckrichtung ausgerichtet sind und
das Lesegerät (16) ein optisches Lesegerät umfasst; und
- ein Fließband zum Fördern der Ware bzw. Verpackung, wobei die Aufdruckrichtung durch eine Bewegung der Ware bzw. Verpackung auf dem Fließband vorgegeben ist.

9. System nach Anspruch 8,
**dadurch gekennzeichnet, dass**
die Druckvorrichtung (11) ein Tintenstrahldrucker (11) mit einer Tintenstrahldüse (15), insbesondere ein Datumsschreiber, ist und/oder die Wareninformation bzw. Verpackungsinhaltsinformation, Zahlen und/oder Buchstaben und/oder Sonderzeichen, insbesondere ein Datum, vorzugsweise Produktionsdatum umfasst, und/oder
das System eine Warnsignaleinrichtung, insbesondere Warnleuchte, umfasst.

10. System nach einem der Ansprüche 8 oder 9,
**dadurch gekennzeichnet, dass**
das Fließband zwischen Druckvorrichtung (11) und Lesegerät (16) vorgesehen ist, um die Waren von der Druckvorrichtung (11) zum Lesegerät (16) zu befördern.

11. System nach einem der Ansprüche 8 bis 10,
**dadurch gekennzeichnet, dass** das optische Lesegerät ein Barcode-Lesegerät, vorzugsweise ein Barcode-Scanner ist.

12. System nach einem der vorhergehenden Ansprüche 8 bis 11,
**dadurch gekennzeichnet, dass** die Druckvorrichtung (11) derart vorprogrammiert ist, dass, wenn extern ein Befehl zum Drucken einer Verpackungsinhaltsinformation, zugeführt wird, automatisch ein Identifikationsmittel (14) auf die Ware bzw. Verpackung gedruckt wird, wobei die Druckvorrichtung zum Aufdrucken auf einer auf einem Fließband geförderten Ware bzw. Verpackung ausgebildet ist, wobei die Aufdruckrichtung durch eine Bewegung der Ware bzw. Verpackung auf dem Fließband vorgegeben ist.

13. Verwendung eines Systems nach einem der Ansprüche 8 bis 12 zur Ermöglichung der Überprüfung des Vorhandenseins und/oder der Lesbarkeit einer Wareninformation oder einer Verpackungsinhaltsinformation mittels eines Lesegeräts (16),
wobei dieselbe Druckvorrichtung (11), insbesondere dieselbe Druckmaterialausstoßeinheit, (15) zum Bedrucken der Ware bzw. der Verpackung (12), sowohl mit der Wareninformation (10) bzw. Verpackungsinhaltsinformation, als auch mit einem zusätzlich zu der Wareninformation bzw. Verpackungsinhaltsinformation, ausgebildeten, separaten Identifikationsmittel (14) verwendet wird, wobei das Identifikationsmittel (14) einen Barcode umfasst, wobei einzelne Striche des Barcodes parallel zu einer Aufdruckrichtung ausgerichtet sind, wobei die Druckvorrichtung zum Aufdrucken auf einer auf einem Fließband geförderten Ware bzw. Verpackung ausgebildet ist, wobei die Aufdruckrichtung durch eine Bewegung der Ware bzw. Verpackung auf dem Fließband vorgegeben ist.

## Claims

1. Method for checking the presence and/or legibility of product information or package contents information of a package, comprising the steps of:
a) applying the product information to the product or package contents information to the package (12), using a printing device (11);
b) applying a separate identification means (14) formed in addition to the product information or package contents information, using the same printing device (11); and
c) detecting the product or package (12), by means of a reading device (16), in order to determine whether the identification means (14) is present and is legible, wherein the identification means (14) comprises a barcode, wherein individual bars of the barcode are aligned parallel to an imprint direction and the reading device (16) comprises an optical reading device, wherein the imprint direction is predetermined by a movement of the product or package contents information on a conveyor belt.

2. Method according to claim 1, **characterized in that** step a) is carried out before step b) and/or **in that** a time interval between the application of the product information or package contents information, and the application of the identification means (14), is less than 20 seconds, preferably less than 3 seconds, still further preferably less than 1 second.

3. Method according to one of the preceding claims, **characterized in that** the identification means is applied behind the product information or package contents information with respect to an application direction,
and/or
**in that** a spatial distance between the product information or package contents information (10) and the identification means (14) is less than or equal to 10 cm, preferably less than or equal to 5 cm and/or greater than or equal to 1 cm, preferably greater than or equal to 3 cm.

4. Method according to one of the preceding claims, **characterized in that** a warning signal and/or a display and/or an interruption of a product processing procedure, in particular product dispatch and/or product packaging and/or product labeling procedure, takes place if it is determined in step c) that the identification means (14) is not present or cannot be read out.

5. Method according to one of the preceding claims, **characterized in that** the same identification means (14) and, optionally, different product information or package contents information are applied to a plurality of product or packages (12).

6. Method according to one of the preceding claims, **characterized in that** the product information or package contents information comprises letters and/or numbers and/or special characters, in particular a production date.

7. Method according to claim 1, **characterized in that** the optical reading device is a barcode reading device, preferably a barcode scanner.

8. System for verifying the presence and/or legibility of product information or package contents information, comprising
- a printing device designed to print the product information or package contents information, as well as a separate identification means (14) designed in addition to the product information or package contents information, onto the product or package (12),
**characterized by**
- a reading device (16) designed to determine whether the identification means (14) is present and readable, wherein the identification means (14) comprises a barcode, wherein individual bars of the barcode are aligned parallel to an imprint direction and the reading device (16) comprises an optical reading device; and
- a conveyor belt for conveying the product or package, wherein the imprint direction is predetermined by a movement of the product or package on the conveyor belt.

9. System according to claim 8, **characterized in that** the printing device (11) is an inkjet printer (11) having an inkjet nozzle (15), in particular a date plotter, and/or the product information or package contents information comprises numbers and/or letters and/or special characters, in particular a date, preferably production date, and/or the system comprises a warning signal device, in particular warning light.

10. System according to one of claims 8 or 9, **characterized in that** the conveyor belt is provided between the printing device (11) and the reading device (16) to convey the product from the printing device (11) to the reading device (16).

11. System according to one of claims 8 to 10, **characterized in that** the optical reading device is a barcode reading device, preferably a barcode scanner.

12. System according to one of the preceding claims 8 to 11, **characterized in that** the printing device (11) is pre-programmed such that, when a command for printing package contents information is externally supplied, an identification means (14) is automatically printed on the product or package, wherein the printing device is designed to print on a product or package conveyed on a conveyor belt, wherein the printing direction is predetermined by a movement of the product or package on the conveyor belt.

13. Use of a system according to one of claims 8 to 12 for enabling the checking of the presence and/or legibility of product information or package contents information by means of a reading device (16), wherein the same printing device (11), in particular the same printing material ejection unit (15), is used for printing the product or package (12) both with the product information (10) or package contents information and with a separate identification means (14) formed in addition to the product information or package contents information, wherein the identification means (14) comprises a barcode, wherein individual bars of the barcode are aligned parallel to an imprint direction, wherein the printing device is designed for imprinting on a product or package conveyed on a conveyor belt, wherein the imprint direction is predetermined by a movement of the product or package on the conveyor belt.

## Revendications

1. Procédé pour vérifier la présence et/ou la lisibilité d'une information de marchandise ou d'une information de contenu d'emballage, comprenant les étapes consistant à :
a) appliquer l'information de marchandise sur la marchandise ou l'information de contenu d'emballage sur l'emballage (12) en utilisant un dispositif d'impression (11) ;
b) appliquer un moyen d'identification séparé (14), conçu en plus de l'information de marchandise ou de l'information de contenu d'emballage, en utilisant le même dispositif d'impression (11) ; et
c) détecter la marchandise ou l'emballage (12) avec un lecteur (16) pour déterminer si le moyen d'identification (14) est présent et lisible, le moyen d'identification (14) comprenant un code à barres, les barres individuelles du code à barres étant orientées parallèlement à une direction d'impression et
le lecteur (16) comprenant un lecteur optique, la direction d'impression étant prédéfinie par un mouvement de la marchandise ou de l'information de contenu d'emballage sur une chaîne de production.

2. Procédé selon la revendication 1,
**caractérisé en ce**
**que** l'étape a) est exécutée avant l'étape b) et/ou qu'un intervalle de temps entre l'application de l'information de marchandise ou de l'information de contenu d'emballage et l'application du moyen d'identification (14) est inférieur à 20 secondes, de préférence inférieur à 3 secondes, encore plus préférablement inférieur à 1 seconde.

3. Procédé selon l'une des revendications précédentes,
**caractérisé en ce**
**que** le moyen d'identification est appliqué derrière l'information de marchandise ou l'information de contenu d'emballage par rapport à une direction d'application, et/ou qu'une distance spatiale entre l'information de marchandise ou l'information de contenu d'emballage (10) et le moyen d'identification (14) est inférieure ou égale à 10 cm, de préférence inférieure ou égale à 5 cm et/ou supérieure ou égale à 1 cm, de préférence supérieure ou égale à 3 cm.

4. Procédé selon l'une des revendications précédentes,
**caractérisé en ce**
**qu'**un signal d'avertissement et/ou un affichage et/ou une interruption d'un procédé de traitement de marchandise, en particulier un procédé d'expédition de marchandise et/ou d'emballage de marchandise et/ou de marquage de marchandise a lieu s'il est déterminé à l'étape c) que le moyen d'identification (14) n'est pas présent ou pas lisible.

5. Procédé selon l'une des revendications précédentes,
**caractérisé en ce**
**que** le même moyen d'identification (14) ainsi que des informations de marchandise ou des informations de contenu d'emballage éventuellement différentes sont appliqués sur une pluralité de marchandises ou d'emballages (12).

6. Procédé selon l'une des revendications précédentes,
**caractérisé en ce**
**que** l'information de marchandise ou l'information de contenu d'emballage comprend des lettres et/ou des chiffres et/ou des caractères spéciaux, en particulier une date de production.

7. Procédé selon la revendication 1,
**caractérisé en ce**
**que** le lecteur optique est un lecteur de code à barres, de préférence un scanner de code à barres.

8. Système pour vérifier la présence et/ou la lisibilité d'une information de marchandise ou d'une information de contenu d'emballage, comprenant :
- un dispositif d'impression conçu pour imprimer l'information de marchandise ou l'information de contenu d'emballage ainsi qu'un moyen d'identification séparé (14), conçu en plus de l'information de marchandise ou de l'information de contenu d'emballage, sur la marchandise ou l'emballage (12),
**caractérisé par**
- un lecteur (16) conçu pour déterminer si le moyen d'identification (14) est présent et lisible, le moyen d'identification (14) comprenant un code à barres, les barres individuelles du code à barres étant orientées parallèlement à une direction d'impression et
le lecteur (16) comprend un lecteur optique ; et
- une chaîne de productionpour transporter la marchandise ou l'emballage, la direction d'impression étant prédéfinie par un mouvement de la marchandise ou de l'emballage sur la chaîne de production.

9. Système selon la revendication 8,
**caractérisé en ce**
**que** le dispositif d'impression (11) est une imprimante à jet d'encre (11) avec une buse à jet d'encre (15), en particulier un enregistreur de date, et/ou l'information de marchandise ou l'information de contenu d'emballage comprend des chiffres et/ou des lettres et/ou des caractères spéciaux, en particulier une date, de préférence la date de production, et/ou
le système comprend un moyen de signal d'avertissement, en particulier une lampe d'avertissement.

10. Système selon l'une des revendications 8 ou 9,
**caractérisé en ce**
**que** la chaîne de productionest prévue entre le dispositif d'impression (11) et le lecteur (16) pour transporter la marchandise du dispositif d'impression (11) vers le lecteur (16) .

11. Système selon l'une des revendications 8 à 10,
**caractérisé en ce**
**que** le lecteur optique est un lecteur de code à barres, de préférence un scanner de code à barres.

12. Système selon l'une des revendications précédentes 8 à 11,
**caractérisé en ce**
**que** le dispositif d'impression (11) est préprogrammé de telle sorte que, lorsqu'un ordre d'impression d'une information de contenu d'emballage est amené de l'extérieur, un moyen d'identification (14) est imprimé automatiquement sur la marchandise ou l'emballage, le dispositif d'impression étant conçu pour imprimer sur une marchandise ou un emballage transportés sur une chaîne de production, la direction d'impression étant prédéfinie par le mouvement de la marchandise ou de l'emballage sur la chaîne de production.

13. Utilisation d'un système selon l'une des revendications 8 à 12 pour permettre la vérification de la présence et/ou de la lisibilité d'une information de marchandise ou d'une information de contenu d'emballage au moyen d'un lecteur (16),
dans laquelle le même dispositif d'impression (11), en particulier la même unité d'éjection de matériau d'impression (15), est utilisé pour imprimer sur la marchandise ou l'emballage (12) aussi bien l'information de marchandise (10) ou l'information de contenu d'emballage qu'un moyen d'identification séparé (14), conçu en plus de l'information de marchandise ou de l'information de contenu d'emballage, le moyen d'identification (14) comprenant un code à barres, les barres individuelles du code à barres étant orientées parallèlement à une direction d'impression, le dispositif d'impression étant conçu pour imprimer sur une marchandise ou un emballage transporté sur une chaîne de production, la direction d'impression étant prédéfinie par un mouvement de la marchandise ou de l'emballage sur la chaîne de production.
